# EUROPEAN PATENT APPLICATION

(11) **EP 4 572 087 A1**
(43) Date of publication of application: **18.06.2025**
(21) Application number: 24307113.1
(22) Date of filing: 16.12.2024
(51) Int. Cl.: H02J 7/02, H02J 7/00, H02M 1/10

(54) **CHARGING APPARATUS COMPATIBLE WITH DIRECT CURRENT INPUT AND ALTERNATING CURRENT INPUT**

(30) Priority: 16.12.2023 CN 202311742106
(71) Applicant: SCHNEIDER ELECTRIC INDUSTRIES SAS, 92500 Rueil-Malmaison (FR)
(72) Inventor: ZHANG, Guoqiang, Shenzhen, 518000 (CN); LI, Huayu, Shenzhen, 518000 (CN); FAN, Zhongxiao, Shenzhen, 518000 (CN); MA, Zhen, Shenzhen, 518000 (CN)
(74) Representative: Manitz Finsterwald Patent- und Rechtsanwaltspartnerschaft mbB

(57) **Abstract**

Embodiments of the disclosure provide a charging apparatus compatible with a DC input and an AC input. The charging apparatus includes an input unit (1) coupled to a power supply; a rectification unit (2) coupled in series to an output end of the input unit (1) and adapted to convert AC in the input unit into DC; a voltage transformation unit (3) connected in series to the rectification unit (2) and adapted to adjust a first voltage of the DC output by the rectification unit (2) to a predetermined second voltage; an output unit (4) coupled to the voltage transformation unit (3); and a processing unit (5) coupled to the voltage transformation unit (3) and the output unit (4), and configured to adjust a magnitude of the second voltage based on a difference of the electrical appliance, so that the second voltage conforms to a predetermined voltage of the electrical appliance.

## Description

### FIELD

Example embodiments of the present disclosure relate generally to the field of electrical devices, and in particular to a charging apparatus compatible with direct current input and alternating current input.

### BACKGROUND

With the continuous development of the direct current power supply, the direct current input charging apparatus is also gradually playing a more important role. On the other hand, in a scene where direct current and alternating current power supplies coexist, users need to select a direct current input charging apparatus or an alternating current input charging apparatus depending on the different power source used. This also brings inconvenience to the users in practical use.

### SUMMARY

In a first aspect of the present disclosure, a charging apparatus compatible with direct current input and alternating current input is provided. The charging apparatus includes an input unit coupled to a power supply and adapted to receive at least one of alternating current and direct current input by the power supply; a rectification unit coupled in series to an output end of the input unit and adapted to convert alternating current in the input unit into direct current; a voltage transformation unit connected in series to the rectification unit and adapted to adjust a first voltage of the direct current output by the rectification unit to a predetermined second voltage; an output unit coupled to the voltage transformation unit and adapted to output a direct current with the second voltage to an electrical appliance; and a processing unit coupled to the voltage transformation unit and the output unit, and configured to adjust a magnitude of the second voltage based on a difference of the electrical appliance, so that the second voltage conforms to a predetermined voltage of the electrical appliance.

In some embodiments, the charging apparatus further includes an anti-surge unit connected in series between the input unit and the rectification unit.

In some embodiments, the charging apparatus further includes an impact-resisting unit connected in series between the input unit and the rectification unit.

In some embodiments, the charging apparatus further includes an anti-electromagnetic interference unit connected in series between the input unit and the rectification unit.

In some embodiments, the charging apparatus further includes a filtering unit arranged between the rectification unit and the voltage transformation unit.

In some embodiments, the processing unit includes a signal receiving port coupled to the output unit and adapted to acquire a pairing signal related to the electrical appliance from the electrical appliance after the output unit is connected to the electrical appliance, and the processing unit is adapted to control the voltage transformation unit to adjust the second voltage output by the voltage transformation unit based on the pairing signal.

In some embodiments, the processing unit further includes a power supply port, wherein the power supply port is coupled to the voltage transformation unit, so as to supply power to the processing unit via the power supply port.

In some embodiments, the processing unit further includes a protection port coupled to an output end of the rectification unit and adapted to send out an early warning signal when an output voltage of the rectification unit is abnormal, so that the processing unit is turned off.

In some embodiments, the output unit includes a universal serial bus interface.

In some embodiments, the impact-resisting unit includes a thermistor.

According to embodiments of the present disclosure, the input unit may allow a power supply to supply power in at least one form of direct current and alternating current; a current supplied by the power supply is rectified into direct current after passing through a rectification unit, and enters a voltage transformation unit after stabilizing the current; so that an input voltage is adjusted to a voltage required by an electrical appliance, and then the voltage outputs to the electrical appliance through an output unit. Thus, the charger can be arbitrarily connected to the alternating current power supply or the direct current power supply to supply power to the electrical appliance, which improves the convenience of use for the user. Moreover, since the user only needs to prepare one charger that can be applicable to scenarios of both the alternating current power supply and the direct current power supply, the cost is also reduced accordingly.

It should be understood that the content described in this content part is not intended to limit the key features or important features of embodiments of the present disclosure, nor is it intended to limit the scope of the present disclosure. Other features of the present disclosure will become apparent from the description below.

### BRIEF DESCRIPTION OF THE DRAWINGS

The above and other features, advantages, and aspects of various embodiments of the present disclosure will become more apparent with reference to the following detailed description taken in conjunction with the accompanying drawings. In the drawings, the same or similar reference numbers represent the same or similar elements, where:
FIG. 1 illustrates a schematic diagram of a charging apparatus provided according to embodiments of the present disclosure;
FIG. 2 illustrates a schematic circuit diagram of a charging apparatus provided according to embodiments of the present disclosure.

### DETAILED DESCRIPTION

Embodiments of the present disclosure will be described in more detail below with reference to the accompanying drawings. Although certain embodiments of the present disclosure are shown in the accompanying drawings, it should be understood that the present disclosure may be implemented in various forms and should not be construed as limited to embodiments set forth herein. Rather, these embodiments are provided for a more thorough and complete understanding of the present disclosure. It should be understood that the accompanying drawings and embodiments of the present disclosure are only for illustrative purposes and are not intended to limit the scope of protection of the present disclosure.

It should be noted that the headings of any section/subsection provided herein are not limiting. Various embodiments are described throughout herein, and any type of embodiment can be included under any section/subsection. Furthermore, embodiments described in any section/subsection may be combined in any manner with any other embodiments described in the same section/subsection and/or different sections/subsections.

In the description of embodiments of the present disclosure, the term "comprise" and similar terms should be interpreted as open inclusion, that is, "including but not limited to". The term "based on" should be interpreted as "based at least in part on". The term "an embodiment" or "the embodiment" should be interpreted as "at least one embodiment". The term "some embodiments" should be interpreted as "at least some embodiments". Other explicit and implicit definitions may also be included below. The terms "first", "second", etc. may refer to different or identical objects. Other explicit and implicit definitions may also be included below.

In the description of embodiments of the present disclosure, the charging apparatus may be used to charge an energy storage element such as a battery. The charging apparatus can also be used to directly supply power to a load such as an electric lamp, an electric motor, etc. In the following description, the energy storage element and/or the load are also referred to as electrical appliance.

As mentioned briefly above, with the continuous development of a direct current power supply, a user often needs to select to use a direct current power supply or an alternating current power supply to supply power to an electrical appliance according to an actual scenario. An existing charging apparatus includes a direct current charging apparatus and an alternating current charging apparatus. When the user uses the direct current power supply or the alternating current power supply, the user needs to use a corresponding charging apparatus to supply power to the electrical appliance. This brings inconvenience to normal use of the user. On the other hand, the user needs to prepare chargers of various specifications, which also increases usage cost additionally.

A charging apparatus compatible with a direct current input and an alternating current input provided according to the present disclosure, the above-described problems and other potential problems existing in conventional solutions can be solved or at least partially solved. According to embodiments of the present disclosure, an input unit may allow a power supply to supply power in at least one form of direct current and alternating current; a current supplied by the power supply is rectified into direct current after passing through a rectification unit, and enters a voltage transformation unit after stabilizing the current; and the voltage transformation unit adjusts an input voltage to a voltage required by an electrical appliance, and then the voltage outputs to the electrical appliance through an output unit. Thus, the charger can be arbitrarily connected to the alternating current power supply or the direct current power supply to supply power to the electrical appliance, which improves the convenience of use for the user. Moreover, since the user only needs to prepare one charger that can be applicable to scenarios of both the alternating current power supply and the direct current power supply, the cost is also reduced accordingly.

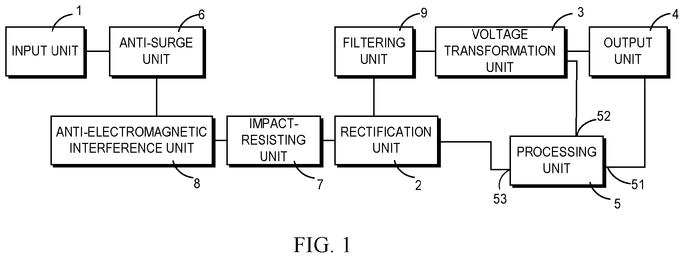

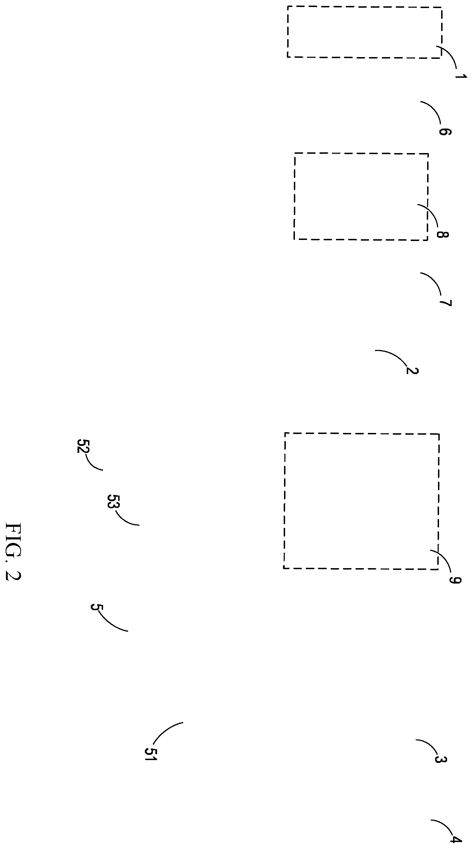

FIG. 1 illustrates a simplified schematic diagram of a charging apparatus circuit according to embodiments of the present disclosure. FIG. 2 illustrates a schematic circuit diagram of a charging apparatus provided according to embodiments of the present disclosure. As shown in FIGS. 1 and 2, the charging apparatus generally includes an input unit 1, a rectification unit 2, a voltage transformation unit 3, an output unit 4, and a processing unit 5.

The input unit 1 may be connected to a power supply, and receive any one or more of direct current power and alternating current power provided by the power supply. That is, the input unit 1 may receive direct current and/or alternating current from a power supply, the rectification unit 2 is connected in series at an output end of the input unit 1, and is adapted to convert alternating current in the input unit 1 into direct current. The voltage transforming unit 3 is connected in series to an end of the rectification unit 2 away from the input unit 1, and is adapted to adjust direct current with a first voltage input into the voltage transforming unit 3 to direct current with a second voltage that matches the electrical appliance. Subsequently, direct current with the second voltage is output to the electrical appliance via the output unit 4 coupled on the voltage transformation unit 3.

The processing unit 5 is coupled to the voltage transformation unit 3 and the output unit 4, and the processing unit 5 is configured to control the voltage transformation unit 3 to adjust a magnitude of an output second voltage based on a predetermined voltage required by an electrical appliance connected to the output unit 4, so that the second voltage matches a voltage used for charging or operating the electrical appliance. How the processing unit 5 identifies a predetermined voltage required by the electrical appliance and controls the voltage transformation unit 3 to change the output second voltage will be described in detail below.

In some embodiments, the input unit 1 may include a plug, a switch device or a circuit breaker, etc., for connection with a power supply. After the power supply between the power supply and the input unit 1 is switched on, the power supply may provide alternating current of, for example, 220 V~264V to the input unit 1, and the power supply may also provide direct current of, for example, 375 V to the input unit 1.

In some embodiments, the rectification unit 2 may include a bridge rectifier. Alternating current output from the input unit 1 to the rectification unit 2 may be converted into positive direct current after passing through the bridge rectifier. When the input unit 1 outputs direct current to the rectification unit 2, direct current may directly pass through the bridge rectifier. Thus, no matter whether the power supply connected to the input unit 1 is a direct current power supply or an alternating current power supply, the power supply can be output as direct current after passing through the rectification unit 2, so as to be further used in an electrical appliance.

In some embodiments, a filtering unit 9 is also arranged between the rectification unit 2 and the voltage transformation unit 3. The filtering unit 9 includes a plurality of filtering capacitors connected in parallel between the output end of the rectification unit 2 and ground. In some embodiments, the filtering unit 9 includes two filtering capacitors arranged in parallel, where an end of each of the two filtering capacitors is coupled to the output end of the rectification unit 2, and the other end is grounded. Two inductance units are further arranged between the two filtering capacitors, and the two inductance units are respectively arranged in series at two ends of the two filtering capacitors. After direct current output by the rectification unit 2 passes through the filtering unit 9, the clutter in the current is filtered out, and the waveform of the current is more stable, thereby improving the quality of the output current of the charging apparatus. Meanwhile, the two inductance units also have a certain anti-electromagnetic interference effect, thereby further optimizing the current output by the rectification unit 2.

In some embodiments, an anti-electromagnetic interference unit 8 is further connected in series between the input unit 1 and the rectification unit 2, so as to reduce electromagnetic interference of a current output by the input unit 1.

In some embodiments, an anti-surge unit 6 and/or an impact-resisting unit 7 may also be connected in series between the input unit 1 and the rectification unit 2. In some embodiments, the anti-surge unit 6 may include an electronic impact-resisting protection circuit, a resistor, a fuse, or the like. In some embodiments, the impact-resisting unit 7 may be a thermistor, and in the initial stage of the charging apparatus being connected to the power supply, the thermistor may provide a relatively large impedance to protect an component in a circuit.

It should be understood that the above anti-surge unit 6, the impact-resisting unit 7 and the anti-electromagnetic interference unit 8 may be arranged in any suitable order in series between the input unit 1 and the rectification unit 2. For example, in some embodiments, the anti-surge unit 6 may be arranged in series between the input unit 1 and the anti-electromagnetic interference unit 8, while the anti-impact-resisting unit 7 may be coupled in series between the anti-electromagnetic interference unit 8 and the rectification unit 2.

In some embodiments, the processing unit 5 includes a signal receiving port 51 coupled to output unit 4. The signal receiving port 51 is adapted to, after the output unit 4 is connected to the electrical appliance, perform a handshake with a protocol chip inside the electrical appliance and obtain a pairing signal related to the electrical appliance. In some embodiments, the pairing signal includes a rated power and a rated voltage of the electrical appliance. After the signal receiving port 51 returns the pairing signals to the processing unit 5, the processing unit 5 may control, based on the pairing signals, the voltage transformation unit 3 to adjust the output second voltage, so that the second voltage meets a requirement of the electrical appliance.

In some embodiments, the processing unit 5 further includes a power supply port 52, which is coupled to the voltage transforming unit 3, and the voltage transforming unit 3 may provide direct current with a third voltage to the processing unit 5. For example, the voltage transformation unit 3 may include a sub-winding, which is coupled to the power supply port 52 and induced to the primary winding of the voltage transformation unit 3 to supply power to the power supply port 52.

In some embodiments, the processing unit 5 further includes a detection port. The detection port is coupled to a sub-winding of the voltage transformation unit 3 and is adapted to send a power supply signal related to a power supply voltage of the sub-winding to the processing unit 5, and the processing unit 5 can adjust a second voltage output by the voltage transformation unit 3 based on the power supply signal, so that the voltage output by the output unit 4 to the electrical appliance is more accurate and stable.

In some embodiments, the processing unit 5 can further include a protection port 53. The protection port 53 is coupled to the output end of the rectification unit 2 and adapted to send out a warning signal when the voltage output by the output end of the rectification unit 2 exceeds or is below a threshold value, so that the processing unit 5 controls the voltage transformation unit 3 to stop working. Thus, the internal components and lines of the charging apparatus are protected.

In some embodiments, the output unit 4 may include a universal serial bus (USB) interface. For example, the output unit 4 may include a universal serial bus (USB) type-A interface, a USB type-C interface, and the like.

Implementations of the present disclosure have been described above. The above description is illustrative, not exhaustive, and is not limited to the disclosed implementations. Many modifications and variations will be apparent to those of ordinary skill in the art without departing from the scope and spirit of the described implementations. The terminology used herein is chosen to best explain the principles, practical applications, or improvements to the technology in the market, or to enable other persons of ordinary skill in the art to understand the various implementations disclosed herein.

## Claims

1. A charging apparatus compatible with a direct current input and an alternating current input, comprising:
an input unit (1) coupled to a power supply and adapted to receive at least one of alternating current and direct current input by the power supply;
a rectification unit (2) coupled in series to an output end of the input unit (1) and adapted to convert alternating current in the input unit (1) into direct current;
a voltage transformation unit (3) connected in series to the rectification unit (2) and adapted to adjust a first voltage of the direct current output by the rectification unit (2) to a predetermined second voltage;
an output unit (4) coupled to the voltage transformation unit (3) and adapted to output a direct current with the second voltage to an electrical appliance; and
a processing unit (5) coupled to the voltage transformation unit (3) and the output unit (4), and configured to adjust a magnitude of the second voltage based on a difference of the electrical appliance, so that the second voltage conforms to a predetermined voltage of the electrical appliance.

2. The charging apparatus of claim 1, further comprising:
an anti-surge unit (6) connected in series between the input unit (1) and the rectification unit (2).

3. The charging apparatus of claim 1, further comprising: an impact-resisting unit (7) connected in series between the input unit (1) and the rectification unit (2).

4. The charging apparatus of any of claims 1 to 3, further comprising:
an anti-electromagnetic interference unit (8) connected in series between the input unit (1) and the rectification unit (2).

5. The charging apparatus of claim 1, further comprising:
a filtering unit (9) arranged between the rectification unit (2) and the voltage transformation unit (3).

6. The charging apparatus of any of claims 1-3 and 5, wherein the processing unit (5) comprises:
a signal receiving port (51) coupled to the output unit (4) and adapted to acquire a pairing signal related to the electrical appliance from the electrical appliance after the output unit (4) is connected to the electrical appliance,
and the processing unit (5) is adapted to control the voltage transformation unit (3) to adjust the second voltage output by the voltage transformation unit (3) based on the pairing signal.

7. The charging apparatus of claim 6, wherein the processing unit (5) further comprises:
a power supply port (52), wherein the power supply port (52) is coupled to the voltage transformation unit (3), so as to supply power to the processing unit (5) via the power supply port (52).

8. The charging apparatus of claim 6, wherein the processing unit (5) further comprises: a protection port (53) coupled to an output end of the rectification unit (2) and adapted to send out an early warning signal when an output voltage of the rectification unit (2) is abnormal, so that the processing unit (5) is turned off.

9. The charging apparatus of claim 1, wherein the output unit (4) comprises a universal serial bus interface.

10. The charging apparatus of claim 3, wherein the impact-resisting unit (7) comprises a thermistor.
